# FASCICULE DE BREVET EUROPEEN

(11) **EP 1 636 095 B1**
(45) Date de publication et mention de la délivrance du brevet: **28.09.2016**
(21) Numéro de dépôt: 04767401.5
(22) Date de dépôt: 21.06.2004
(51) Int. Cl.: B65B 29/02, A23F 3/00, A23L 2/395, A23L 27/10, A23G 1/02, B65D 81/34, A47J 31/10, A47J 31/40

(54) **BOISSON CHOCOLATEE PREPAREE A PARTIR D'UNE MACHINE DE TYPE EXPRESSO ET MOYENS POUR SON OBTENTION**
UNTERVERWENDUNG EINER ESPRESSOMASCHINENARTIGEN MASCHINE ZUBEREITETES & xA;KAKAOGETRÄNK UND MITTEL ZU DESSEN ERHALT
CHOCOLATE DRINK PREPARED USING AN ESPRESSO-TYPE MACHINE, AND MEANS OF PRODUCING SAME

(30) Priorité: 20.06.2003 FR 0307506
(43) Date de publication de la demande: 22.03.2006
(73) Titulaire: Barry Callebaut AG, 8005 Zürich (CH)
(72) Inventeur: TROPLIN, Philippe, F-27400 Louviers (FR); DE CLERCQ, Dirk, B-9850 VOSSELARE (BE); RAYBAUD, Guy, F-78200 Mantes la Jolie (FR); LECOUPEAU, Jean-Paul, F-27940 Venables (FR)
(74) Mandataire: Cabinet Armengaud Aîné
(86) Numéro de dépôt international: PCT/FR2004/001545
(87) Numéro de publication internationale: WO 2004/112514

(56) Documents cités:
- EP-A- 0 449 533
- EP-A- 0 512 148
- EP-A- 1 190 959
- EP-A- 1 440 908
- WO-A-96/34535
- GB-A- 751 121
- GB-A- 1 220 816
- US-A- 3 385 710
- US-A- 3 607 297
- US-A- 5 472 719
- US-A1- 2003 033 938
- CHATT E M ED - KERTESZ Z I: "COCOA, PASSAGE" 1953, COCOA, ECONOMIC CROPS, NEW YORK, INTERSCIENCE, US, PAGE(S) 207 , XP002278257 page 207, ligne 31 - ligne 37
- MINIFIE B W: "Chocolate, cocoa and confectionery: SCIENCE AND TECHNOLOGY, PASSAGE" CHOCOLATE, COCOA AND CONFECTIONERY: SCIENCE AND TECHNOLOGY, LONDON, CHURCHILL, GB, 1970, pages 48-49, XP002278258

## Description

La présente invention est relative à une boisson chocolatée préparée à partir d'une machine à café de type expresso fonctionnant avec des doses pré-conditionnées. Elle a également pour objet les moyens pour son obtention, et plus particulièrement, des concentrés permettant sa préparation ainsi que des capsules contenant de tels concentrés. Une boisson chocolatée de ce type a été envisagée dans la demande EP 1 190 959. Cette demande se rapporte à des cartouches destinées à être utilisées avec des machines à café de type expresso. Plus particulièrement, cette demande décrit une cartouche fermée, prévue pour une extraction sous pression, contenant une substance pour la préparation d'une boisson choisie parmi le café torréfié et moulu, le thé, le café soluble, un mélange de café moulu et de café soluble, un produit chocolaté ou toute autre substance comestible déshydratée.

La demande de brevet US2003/0033938 décrit également une cartouche pouvant contenir une préparation pour boisson chocolatées destinée à être insérée dans une machine de type espresso

Par « machine à café de type expresso fonctionnant avec des doses », on entend toute machine telle que conçue pour effectuer la percolation sous pression de doses individuelles de café. Dans la présente demande, lorsqu'il sera fait référence à une machine à café, il s'agira d'une machine du type décrit ci-dessus.

Les machines à café envisagées sont destinées à la percolation. Dans la présente demande, il s'agit de détourner la fonction de percolation par une fonction de solubilisation afin de préparer une boisson chocolatée. La création d'un concentré chocolaté apte à être solubilisé par la machine à café permet de rendre celle-ci polyvalente, la même machine pouvant alors préparer aussi bien du café que du chocolat.

Par « concentré », on entend un extrait de cacao présentant les caractéristiques d'une boisson chocolatée au moins partiellement déshydratée.

Dans toute la demande, il sera fait référence indifféremment aux termes : « capsule », « dose » et « cartouche ». Ces trois termes seront considérés comme équivalents, bien que les termes « capsule » et « cartouche » se rapportent plus spécifiquement à un emballage.

Les travaux des inventeurs les ont amenés à constater qu'un chocolat en poudre classique (par exemple, une poudre de cacao du commerce), présenté dans une capsule et solubilisé par une machine à café de type expresso ne permettait pas l'obtention d'une boisson chocolatée satisfaisante en terme de goût. En effet, la boisson chocolatée obtenue comporte un taux de cacao assez faible. Cette faible teneur en cacao est essentiellement due à la faible solubilité du cacao contenu dans la capsule (voir exemple 2).

La présente invention propose donc une boisson chocolatée comportant au moins 2% de cacao préparée à partir d'une machine à café telle que prévue pour fonctionner par percolation sous pression d'une dose de café conditionnée dans une capsule, ladite capsule contenant un concentré de la boisson chocolatée.

La boisson chocolatée selon l'invention comporte avantageusement au moins 2,30% de cacao, de préférence, au moins 2,40%.

La bonne teneur en cacao est obtenue principalement grâce à la solubilisation du concentré en totalité lors du passage de l'eau sous pression. Dans les machines de type expresso, ce temps de passage est très court, de l'ordre de quelques secondes.

Plus précisément, la solubilité du concentré est telle que celui-ci est entièrement solubilisé par le passage de 90g d'eau maximum, ladite eau étant à une température de 60 à 70°C et à une pression de 6.10⁵Pa maximum, ledit concentré ayant un pourcentage de matière sèche de 60 à 90%, bornes incluses.

Ce fort pourcentage en matière sèche permet d'obtenir une boisson ayant outre un fort goût cacao, du corps et de l'onctuosité. Ce pourcentage en matière sèche est obtenu entre autre grâce à l'association de la poudre de cacao avec l'exhausteur de goût.

Les temps de passage de l'eau sous pression dans les machines à café varient entre 25 et 40s en moyenne, hors temps de montée en pression. La solubilisation du concentré doit donc être réalisée durant ce temps de passage de l'eau. De préférence, la solubilisation sera réalisée durant un temps de 30 à 35s.

D'autres propriétés physico-chimiques sont susceptibles d'influencer la teneur en cacao de la boisson chocolatée obtenue. Préférentiellement, le concentré possède une densité de 1,15 à 1,45, bornes incluses. Plus particulièrement, le concentré est sous forme liquide. Sa viscosité peut également être contrôlée afin de lui conserver sa bonne solubilité. Avantageusement, cette viscosité peut être de 1300 à 2900mPa/s, bornes incluses.

Afin d'augmenter la solubilité du concentré, les inventeurs ont mis au point un exhausteur de goût cacao. Cet exhausteur de goût cacao est non seulement très soluble dans l'eau mais apporte également des avantages du point de vue gustatif.

L'exhausteur de goût cacao est obtenu par un procédé comportant les étapes suivantes:
- Extraction à l'eau de grains de cacao torréfiés, ladite extraction comportant une étape de macération sous agitation pendant un temps de 30mn à 1h30,
- Filtration des grains,
- Récupération du jus
- Evaporation/Concentration/Séchage du jus.

Par l'appellation « exhausteur de goût cacao », on entend un extrait hydrosoluble de cacao utilisé en combinaison avec une poudre de cacao. Cet exhausteur de goût cacao permet d'améliorer le profil aromatique du cacao dans la boisson chocolatée selon l'invention. En effet, les extraits de cacao ne reproduisent pas fidèlement le profil aromatique du cacao. L'exhausteur de goût cacao, utilisé en combinaison avec une poudre de cacao, permet de se rapprocher du profil aromatique du cacao et de renforcer le goût de la boisson chocolatée.

Pour certaines applications, l'exhausteur de goût cacao selon l'invention sera obtenu par un procédé comportant une étape d'alcalinisation durant la macération et/ou une étape de torréfaction à l'issue du séchage du jus.

L'étape d'alcalinisation permet de modifier la couleur de la poudre de cacao et de faire évoluer le goût vers des arômes plus intenses, plus puissants. La couleur de la poudre de cacao est plus foncée, avec des nuances brunes ou rouges. L'arôme de l'exhausteur de goût se trouvant renforcé, il est possible de l'utiliser en quantité moindre dans le concentré de la boisson chocolatée.

Par conséquent, la boisson chocolatée selon l'invention sera préparée de préférence à partir d'un concentré comportant dans sa composition l'exhausteur de goût cacao selon l'invention.

L'invention vise également les concentrés de boisson chocolatée instantanée permettant la préparation de la boisson chocolatée.

Avantageusement, ces concentrés ont une densité de 1,15 à 1,45, bornes incluses, et une viscosité de 1300 à 2900mPa/s, bornes incluses. Préférentiellement, lesdits concentrés sont sous forme liquide et comportent en outre un exhausteur de goût cacao selon l'invention.

L'exhausteur de goût cacao est introduit de manière préférentielle à une concentration de 1 à 10%, bornes incluses.

Des exemples de recettes de concentrés sont décrites dans l'exemple 1.

La présente invention vise également les capsules fermées de machine à café fonctionnant par percolation sous pression, contenant un concentré selon l'invention. En particulier, de telles capsules ont un volume utile de 10 à 40mL, bornes incluses, de préférence de 20 à 30mL.

L'utilisation des machines à café de type expresso fonctionnant par percolation sous pression d'une dose de café conditionnée dans une capsule, pour la fabrication d'une boisson chocolatée selon l'invention, entre également dans le champ de l'invention. Plus particulièrement, de telles machines sont caractérisées en ce qu'elles délivrent une pression d'au moins 4.10⁵Pa, de préférence, au moins 5.10⁵Pa.

D'autres caractéristiques et avantages de l'invention apparaîtront dans les exemples qui suivent.

### Exemple 1 Recettes et fiches techniques

### A. Recettes

Le concentré selon l'invention comporte au moins les ingrédients suivants : du sucre et/ou du sirop de glucose, de l'eau, de la poudre de cacao maigre, de la poudre de lait entier, un exhausteur de goût cacao et des arômes (sels, vanilline).

La poudre de cacao maigre peut être remplacée en tout ou partie par de la poudre de cacao naturelle ou préférentiellement de la poudre de cacao alcalinisé. En outre, l'utilisation de poudre de cacao « non maigre » renforce l'onctuosité de la boisson chocolatée finale.

L'exhausteur de goût cacao permet d'augmenter la solubilité du concentré et de renforcer le goût du chocolat.

Avantageusement, le concentré selon l'invention comporte en outre, des matières grasses végétales ou animales autre que le beurre de cacao. Ces matières grasses, telles que le coprah ou la matière grasse laitière, donnent à la boisson finale une onctuosité importante, du corps et du velouté. Leur utilisation dans la recette doit cependant être limitée afin que la grande solubilité du concentré soit maintenue.

Alternativement, ces matières grasses peuvent être remplacée en tout ou partie par d'autres ingrédients tels que des épaississants, des gélifiants (cellulose, méthylcellulose), des stabilisants (carraghénane, alginate, guar, pectine carboxyméthylcellulose etc...) et/ou des amidons modifiés.

Des dérivés laitiers peuvent également remplacer tout ou partie de la poudre de lait entier. En particulier, le lactosérum apporte une meilleure intensité de goût et du point de vue nutritif, il contribue à augmenter nettement la quantité de minéraux présente dans la boisson. La matière lactée et une partie du sucre peuvent également être introduites sous forme de lait concentré sucré.

L'introduction d'émulsifiants tels que la lécithine de soja permet d'améliorer la solubilité du concentré selon l'invention.

**Tableau des recettes**

| Echantillon | Cacao % | Exhausteur de goût cacao% | Matière grasse végétale % | Lacto serum % | Sucre % | Lait entier % | Autres Ingrédients % | Eau % |
|---|---|---|---|---|---|---|---|---|
| **2*** | 9 | 0 | 5** | 2 | 46 | 7 | +*** | 30 |
| **8** | 15 | 0 | 0 | 2 | 43 | 7 | +*** | 30 |
| **12*** | 12 | 0 | 5** | 5 | 40 | 7 | +*** | 30 |
| **17*** | 12 | 2 | 5** | 5 | 38 | 7 | +*** | 30 |
| **18*** | 12 | 1 | 8** | 5 | 36 | 7 | +*** | 30 |
| **19*** | 12 | 2 | 8** | 5 | 35 | 7 | +*** | 30 |
| **20** | 15 | 2 | 0 | 2 | 43 | 7 | +*** | 30 |
| **21** | 15 | 2 | 0 | 2 | 42 | 7 | Amidon pdt 2% +*** | 30 |
| **22** | 15 | 2 | 0 | 2 | 42 | 7 | Amidon riz 2% +*** | 30 |
| **23** | 15 | 2 | 5** | 2 | 38 | 7 | +*** | 30 |

| | | | | | | | | |
|---|---|---|---|---|---|---|---|---|
| * Utilisation de poudre de cacao à 20/22% de matière grasse (poudre de cacao non maigre). Dans les autres cas, de la poudre à 10/12% de matière grasse est utilisée (poudre de cacao maigre). ** La matière grasse utilisée est de la graisse de coprah 24/26. *** Les autres ingrédients sont du sel et des arômes, en particulier, de la vanilline. Pdt signifie « pomme de terre ». | | | | | | | | |

### B. Procédé de fabrication

L'eau froide, le sirop de glucose et/ou de sucre, le lait entier en poudre et/ou le lactosérum sont introduits dans un cuiseur double enveloppe à vapeur sous vide. La cuisson est réalisée pendant 5 à 15 minutes, à une vapeur de 85 à 90°C, sous un vide de -0,5 à - 0,7.10⁵Pa.

La poudre de cacao, l'exhausteur de goût cacao et la matière grasse végétale sont ensuite ajoutés au mélange 1, puis une nouvelle cuisson est opérée à 85 / 90°C sous le même vide pendant 5 à 15 minutes.

Le mélange subit ensuite une phase de lissage par agitation rapide jusqu'à l'obtention d'une texture parfaitement homogène et lisse. La durée minimum de cette phase de lissage est d'environ 5 minutes.

On procède enfin au contrôle du brix du produit puis on le conditionne dans des poches (« bag in box ») ou containers à une température de 80 +/- 2,5°C.

**Caractéristiques physico-chimiques**

| **Critères** | **Recettes 17 et 20** | **Méthodes** |
|---|---|---|
| Matière sèche | 67+/- 3brix | Indice de réfraction mesuré à 20°C |
| pH | 6,4 +/- 0,5 | O.I.C.C.* page 9 - E-/1972 |
| Activité de l'eau | 0,85 max. | Mesuré au Rotronic |
| Viscosité | 1000-6000m/Pa.s | Brookfield à 20°C, N6 vitesse 20 |
| Densité | 1,27+/-0,05kg/L | |

**Caractéristiques microbiologiques**

| **Critères** | **Recettes 17 et 20** | **Méthodes** |
|---|---|---|
| Germes totaux | 5.000/g | ISO 4833 (1991) |
| Levure | 50/g | ISO 7954 (1988) |
| Moisissures | 50/g | ISO 7954 (1988) |
| *Enterobacteriaceae* | 10/g | ISO 7402 (1993) |
| Coliformes | 10/g | ISO 4831 (1991) |
| *E. Coli* | 0/g | ISO 7251 (1994) |
| *Staphylococcus coagulase* | 0/g | ISO 6888 (1987) |
| *Salmonellae* | Abs/750 g | ISO 6579 (1993) |

**Informations nutritionnelles**

| **Critères** | **Valeurs : recette 17** | **Valeurs : recette 20** |
|---|---|---|
| Glucides | 46.1% | 49.3% |
| Lipides | 9.4% | 3.3% |
| Protéines | 5.0% | 5.1% |
| Valeurs nutritionnelles | 289 kcal/100 g ou 1207 kJ/100g | 247 kcal/100 g ou 1036 kJ/100 g |

**Conditions d'expédition et de stockage**

| Critères | Valeurs |
|---|---|
| Transport | < 25°C |
| Stockage | < 25°C |
| DLUO | Au moins 12 mois à partir de la date de fabrication |

**Informations sécurité alimentaire**

| Critères | Valeurs |
|---|---|
| Statut OGM | Le produit ne contient pas d'ingrédients obtenus à partir d'organismes génétiquement modifiés. |
| Métaux lourds | En accord avec Codex Alimentarius |

### Exemple 2 : Tests de solubilisation - Comparaison des boissons chocolatées obtenues à partir de capsules contenant un concentré selon l'invention ou du cacao en poudre classique.

Dans une capsule de 25mL, le concentré liquide est comparé avec un équivalent en poudre.

L'expérience est réalisée sur une machine à café expresso, dans les conditions décrites ci-dessous :

**Descriptif et résultat du test**

| **Capsule** | **Concentré liquide** | **Produit chocolaté en poudre** |
|---|---|---|
| Volume : | 25ml | 25ml |
| Densité du produit dans la capsule : | 1,27kg/L | 0,650kg/L |
| Poids produit dans la capsule : | 30g | 16g |
| Concentration produit : | 70% en poids | 100% en poids |
| Poids matière sèche dans la capsule : | 21g | 16g |
| | | |
| **Conditions machine** | | |
| Pression d'injection de l'eau : | 6.10⁵Pa | 6.10⁵Pa |
| Température de l'eau : | 70°C | 70°C |
| Débit de la machine : | | |
| Temps de montée en pression : | 12s | 12s |
| Temps de passage à travers la capsule : | 33s | 33s |
| Quantité d'eau introduite dans la tasse : | 90g | 99g (90 + 9) |
| | | |
| **Recette avant percolation** | | |
| Poudre de cacao : | 14% | 14% |
| | | |
| **Résultat de la percolation dissolution** | | |
| Quantité de la dissolution : | 100% | < 75% |
| Quantité extraite de la capsule : | 21g | 12g |
| Quantité produit dans la tasse : | 21/(90+9+21) | 12/(99+12) |
| | soit **17,5%** | soit **10,8%** |
| **Quantité de poudre de cacao dans la tasse :** | **2,45%** | **1,5%** |

Par conséquent, dans le cas du concentré et pour une même quantité d'eau dans la tasse, 63% de plus de cacao sont présent dans la tasse dans le cas du concentré selon l'invention en comparaison avec le produit en poudre. Ceci démontre la solubilité supérieure du concentré.

### Exemple 3 : Exhausteur de goût cacao

L'exhausteur de goût cacao peut être obtenu sous deux qualités :
- une poudre soluble dite alcalinisée
- une poudre soluble dite naturelle

La matière première pouvant être utilisée pour la fabrication de l'exhausteur de goût cacao est constituée de grains de cacao torréfiés. Il sera fait référence à cette matière première sous l'appellation « grain ».

Le procédé repose sur une extraction Solide / Liquide, suivie d'une séparation des phases, d'une concentration, et d'un séchage.

### I. Poudre soluble alcalinisée:

### a. Traitement du grain.

La première étape du procédé est une extraction liquide/solide. Cette opération consiste en une étape d'humectation / d'alcalinisation / de macération du grain en présence d'eau. Le grain est humecté au minimum avec 2 fois son volume d'eau. Il est préférable toutefois de travailler avec une quantité d'eau égale à 4 ou 5 fois le volume de grain.

L'alcalinisation est réalisée avec des composés alcalins en quantité et en qualité définis par la loi européenne. De tels composés peuvent être choisis avantageusement parmi les carbonates alcalins, les hydroxydes alcalins, les carbonates de magnésium, les oxydes de magnésium, les solutions ammoniacales, tels que définis dans la directive 73/241/CEE du Conseil du 24 juillet 1973, relativement au rapprochement des législations des Etats membres concernant les produits de cacao et de chocolat destinés à l'alimentation humaine. De préférence, on utilisera le carbonate de potassium.

Cette opération d'alcalinisation peut être réalisée selon deux schémas :
- alcalinisation directe sur le grain au début de l'opération d'extraction, ou,
- alcalinisation après la filtration, soit directement sur le jus extrait.

La macération peut être faite sous agitation lente pendant un temps pouvant aller de 30 minutes à 3 heures avec une préférence pour 1 heure à 1 heure et demi. La température de macération est avantageusement située entre 50 et 100°C, de préférence autour de 80°C.

L'extraction est suivie d'une étape de filtration. Cette opération consiste à séparer la phase solide de la phase liquide. Elle peut être avantageusement réalisée à l'aide d'un filtre à poche ou d'une essoreuse centrifuge.

Le lavage du grain permet ensuite de récupérer le maximum d'extrait. Plusieurs lavages du grain, réalisés avec de l'eau, peuvent être nécessaires. Chaque fraction de lavage est ensuite re-combinée au premier jus d'extraction.

A l'issue de ces différentes étapes, un jus contenant le cacao extrait est obtenu. Ce jus constitue la base de l'exhausteur de goût cacao.

### b. Traitement du jus extrait :

Le jus extrait subit en premier lieu une évaporation-concentration. Cette opération consiste à éliminer la majeure partie de l'eau. Afin d'obtenir un sirop concentré, il est nécessaire de travailler entre 50 et 100°C sous pression réduite.

Le sirop concentré obtenu est ensuite séché, selon les procédés de séchage alternatifs décrits ci-dessous :
- i.: atomisation sur tour, obtention d'une poudre granulée ou non ;
- ii.: séchage sur sécheur à rouleaux : obtention d'une poudre sous forme de paillettes ;
- iii.: séchage au four : obtention d'un masse cristallisée, nécessitant un broyage pour être transformée en poudre.

Dans le cas d'un séchage ne donnant pas satisfaction au niveau des caractéristiques organoleptiques, tel que goût de grillé, une torréfaction complémentaire peut être nécessaire. Celle-ci est alors avantageusement réalisée à l'aide de techniques utilisant de l'air chaud. A titre d'exemple, de telles techniques peuvent être choisies parmi les techniques suivantes : lit fluidisé, vis double enveloppe chauffante, réacteur double enveloppe chauffant, four, torréfacteur etc.

### II. Poudre soluble naturelle :

Le procédé est identique au procédé décrit ci-dessus, dans son déroulement, à l'exception de l'étape d'alcalinisation, qui est omise.

### Exemple 4 : Réalisation d'une capsule

Avant d'être conditionné dans des capsules, le concentré est stocké dans un container de 1000kg, scellé après remplissage. La durée de vie du produit dans ces conditions est d'au moins 12 mois, conservé à une température de moins de 25°C. La valve du container est également stérilisée à la vapeur. Le container est vidé à l'aide d'une pompe.

Alternativement, le produit peut être conservé dans des poches. Dans ce cas, la valve doit être stérilisée, de préférence avec de l'alcool isopropylique ou autre solution stérilisante.

La machine de conditionnement est mise en surpression avec de l'air stérile. De même, tout le matériel est désinfecté. Le tuyau reliant le container à la conditionneuse est également stérilisé à la vapeur (30mn, 120°C).

Les capsules utilisées pour contenir le concentré selon l'invention sont en matériaux purs ou multicouches pour protéger le contenu de la capsule contre la reprise en humidité et contre l'oxydation par l'oxygène de l'air. A titre d'exemple, on peut citer l'aluminium, un plastique (PP, PE, PA), un composite (carton/aluminium/plastique), l'EVOH, le PVDC, le PET... De telles capsules sont décrites dans la demande de brevet EP 1 190 959.

### A. Remplissage aseptique à froid

Du fait que le contenu de la capsule est un liquide, le remplissage des capsules est réalisé avantageusement de manière aseptique et à froid.

Avant remplissage les capsules doivent être stérilisées. Une telle stérilisation peut être effectuée à titre d'exemple avec du peroxyde d'hydrogène. Puis, les capsules sont séchées avec de l'air stérile.

Les capsules sont ensuite remplies avec le concentré selon l'invention. L'opercule est scellé à 200°C afin de réaliser la stérilisation. L'espace entre niveau du liquide et l'opercule est remplacé par un gaz neutre, de l'azote par exemple.

### B. Remplissage non aseptique.

Alternativement, le remplissage peut être réalisé de manière non aseptique. Dans ce cas, le produit est chauffé à une température d'au moins 75°C et cette température est maintenue dans la capsule pendant au moins 10 minutes. Si le produit est chauffé à 85°C, cette température est maintenue dans la capsule pendant au moins 15 secondes.

Dans ces conditions, il existe un risque de déviation du goût et une augmentation de la viscosité, mais il n'est pas nécessaire de stériliser les capsules.

## Revendications

1. Procédé de préparation d'une boisson chocolatée comportant au moins 2% de cacao, à l'aide d'une machine à café fonctionnant par percolation sous pression comprenant les étapes suivantes :
(i) Insertion, dans une machine à café fonctionnant par percolation sous pression d'une dose de café, d'une capsule contenant un concentré de boisson chocolatée instantanée, comprenant de la poudre de cacao et un exhausteur de goût cacao, cet exhausteur étant produit par un procédé d'extraction solide/liquide à partir de grains de cacao torréfiés, comme matière première, cette étape d'extraction étant suivie d'une étape de filtration avec séparation de la phase solide de la phase liquide, d'une concentration et d'un séchage du sirop concentré obtenu,
(ii) injection de l'eau pour solubiliser le concentré et,
(iii) récupération de la boisson chocolatée.

2. Procédé selon la revendication 1, **caractérisé en ce que** l'extraction liquide/solide comprend une étape d'humectation, et de macération des grains en présence d'eau, le cas échéant précédée d'une étape d'alcalinisation.

3. Procédé selon la revendication 2, **caractérisé en ce que** dans le cas où une étape d'alcalinisation est mise en oeuvre, l'alcalinisation est réalisée directement sur les grains au début de l'opération d'extraction ou après la filtration, sur le jus extrait.

4. Procédé selon l'une quelconque des revendications 1 à 3, **caractérisé en ce que** ledit concentré a un pourcentage de matières sèches de 60 à 90%, bornes incluses, et que 21 g dudit concentré sont entièrement solubilisés par le passage, à une température de 60 à 70°C et à une pression de 6.10⁵Pa maximum, de 90g d'eau maximum.

5. Procédé selon l'une quelconque des revendications 1 à 4, **caractérisé en ce que** le concentré possède une densité de 1,15 à 1,45, bornes incluses.

6. Procédé selon l'une quelconque des revendications 1 à 5, **caractérisé en ce que** le concentré a une viscosité comprise entre 1300 et 2900mPa/s.

7. Procédé selon l'une quelconque des revendications précédentes, **caractérisé en ce que** ledit concentré est sous forme liquide.

8. Procédé selon l'une quelconque des revendications 1 à 7, **caractérisé en ce que** l'exhausteur de goût est introduit à une concentration de 1 à 10%.

9. Concentré de boisson chocolatée instantanée, **caractérisé en ce qu'**il comporte en combinaison de la poudre de cacao et un exhausteur de goût cacao, cet exhausteur de goût étant produit par un procédé d'extraction solide/liquide à partir des grains comme matière première, à savoir des fèves de cacao torréfiés, cette étape d'extraction étant suivie d'une étape de filtration avec séparation de la phase solide de la phase liquide , d'une concentration et d'un séchage du sirop concentré obtenu.

10. Concentré selon la revendication 9, **caractérisé en ce que** ladite extraction liquide/solide comprend une étape d'humectation, et de macération des grains en présence d'eau le cas échéant précédée d'une étape d'alcalinisation.

11. Concentré selon la revendication 10, **caractérisé en ce que** dans le cas où une étape d'alcalinisation est mise en oeuvre, l'alcalinisation est réalisée directement sur les grains au début de l'opération d'extraction ou après la filtration, sur le jus extrait.

12. Concentré selon l'une quelconque des revendications 9 à 11, **caractérisé en ce que** l'exhausteur de goût est présent à une concentration de 1 à 10%.

13. Concentré selon l'une quelconque des revendications 9 à 12, **caractérisé en ce que** 21 g dudit concentré sont entièrement solubilisés par le passage de 90g d'eau maximum, ladite eau étant à une température de 60 à 70°C et à une pression de 6.10⁵Pa maximum, pour un pourcentage de matières sèches de 60 à 90 %, bornes incluses.

14. Concentré selon l'un quelconque des revendications 9 à 13, **caractérisé en ce qu'**il possède une densité de 1,15 à 1,45, bornes incluses.

15. Concentré selon l'une quelconque des revendications 9 à 14, **caractérisé en ce qu'**il a une viscosité de 1300 à 2900mPa/s, bornes incluses.

16. Capsule de machine à café fonctionnant par percolation sous pression, **caractérisée en ce qu'**elle contient un concentré selon l'une quelconque des revendications 9 à 15.

17. Capsule selon la revendication 16, **caractérisée en ce que** son volume utile est de 10 à 40 mL, bornes incluses.

18. Utilisation du concentré selon l'une quelconque des revendications 9 à 15 ou d'une capsule selon la revendication 16 ou 17, pour la fabrication d'une boisson chocolatée ayant au moins 2% de cacao solubilisé.

## Patentansprüche

1. Verfahren zur Herstellung eines Kakaogetränks, das wenigstens 2% Kakao umfasst, mit Hilfe einer Kaffeemaschine, die durch Perkolation unter Druck funktioniert, umfassend die folgenden Schritte:
(i) Einsetzen einer Kapsel, die ein Konzentrat eines Instant-Kakaogetränks enthält, das Kakaopulver und einen Kakaogeschmacksverstärker umfasst, in eine Kaffeemaschine, die durch Perkolation einer Kaffeedosis unter Druck funktioniert, wobei dieser Geschmacksverstärker durch ein Fest-/Flüssig-Extraktionsverfahren aus gerösteten Kakaobohnen als Rohstoff hergestellt ist, wobei auf diesen Extraktionsschritt ein Schritt der Filtration mit Abtrennung der festen Phase von der flüssigen Phase, eine Konzentration und eine Trocknung des erhaltenen konzentrierten Sirups folgen;
(ii) Einspritzen von Wasser, um das Konzentrat aufzulösen; und
(iii) Gewinnen des Kakaogetränks.

2. Verfahren gemäß Anspruch 1, **dadurch gekennzeichnet, dass** die Fest-/ Flüssig-Extraktion einen Schritt des Anfeuchtens und Aufweichens der Bohnen in Gegenwart von Wasser umfasst, dem gegebenenfalls ein Schritt des Alkalisierens vorausgeht.

3. Verfahren gemäß Anspruch 2, **dadurch gekennzeichnet, dass** im Falle der Durchführung eines Alkalisierungsschritts die Alkalisierung am Anfang des Extraktionsschritts direkt mit den Bohnen oder nach der Filtration mit dem extrahierten Saft erfolgt.

4. Verfahren gemäß einem der Ansprüche 1 bis 3, **dadurch gekennzeichnet, dass** das Konzentrat einen prozentualen Trockensubstanzgehalt von 60 bis 90% einschließlich aufweist und dass 21 g des Konzentrats durch das Hindurchtreten von maximal 90 g Wasser bei einer Temperatur von 60 bis 70 °C und unter einem Druck von maximal 6·10⁵ Pa vollständig löslich sind.

5. Verfahren gemäß einem der Ansprüche 1 bis 4, **dadurch gekennzeichnet, dass** das Konzentrat eine Dichte von 1,15 bis 1,45 einschließlich besitzt.

6. Verfahren gemäß einem der Ansprüche 1 bis 5, **dadurch gekennzeichnet, dass** das Konzentrat eine Viskosität zwischen 1300 und 2900 mPa/s umfasst.

7. Verfahren gemäß einem der vorstehenden Ansprüche, **dadurch gekennzeichnet, dass** das Konzentrat in flüssiger Form vorliegt.

8. Verfahren gemäß einem der Ansprüche 1 bis 7, **dadurch gekennzeichnet, dass** der Geschmacksverstärker in einer Konzentration von 1 bis 10% eingeführt wird.

9. Konzentrat eines Instant-Kakaogetränks, **dadurch gekennzeichnet, dass** es eine Kombination des Kakaopulvers mit einem Kakaogeschmacksverstärker umfasst, wobei dieser Geschmacksverstärker durch ein Fest-/Flüssig-Extraktionsverfahren aus Bohnen als Rohstoff, und zwar gerösteten Kakaobohnen, hergestellt ist, wobei auf diesen Extraktionsschritt ein Schritt der Filtration mit Abtrennung der festen Phase von der flüssigen Phase, eine Konzentration und eine Trocknung des erhaltenen konzentrierten Sirups folgen.

10. Konzentrat gemäß Anspruch 9, **dadurch gekennzeichnet, dass** die Fest-/ Flüssig-Extraktion einen Schritt des Anfeuchtens und Aufweichens der Bohnen in Gegenwart von Wasser umfasst, dem gegebenenfalls ein Schritt des Alkalisierens vorausgeht.

11. Konzentrat gemäß Anspruch 10, **dadurch gekennzeichnet, dass** im Falle der Durchführung eines Alkalisierungsschritts die Alkalisierung am Anfang des Extraktionsschritts direkt mit den Bohnen oder nach der Filtration mit dem extrahierten Saft erfolgt.

12. Konzentrat gemäß einem der Ansprüche 9 bis 11, **dadurch gekennzeichnet, dass** der Geschmacksverstärker in einer Konzentration von 1 bis 10% vorhanden ist.

13. Konzentrat gemäß einem der Ansprüche 9 bis 12, **dadurch gekennzeichnet, dass** 21 g des Konzentrats durch das Hindurchtreten von maximal 90 g Wasser, wobei sich das Wasser bei einer Temperatur von 60 bis 70 °C und unter einem Druck von maximal 6.10⁵ Pa befindet, bei einem prozentualen Trockensubstanzgehalt von 60 bis 90% einschließlich vollständig löslich sind.

14. Konzentrat gemäß einem der Ansprüche 9 bis 13, **dadurch gekennzeichnet, dass** es eine Dichte von 1,15 bis 1,45 einschließlich besitzt.

15. Konzentrat gemäß einem der Ansprüche 9 bis 14, **dadurch gekennzeichnet, dass** es eine Viskosität von 1300 bis 2900 mPa/s einschließlich aufweist.

16. Kapsel einer Kaffeemaschine, die durch Perkolation unter Druck funktioniert, **dadurch gekennzeichnet, dass** sie ein Konzentrat gemäß einem der Ansprüche 9 bis 15 enthält.

17. Kapsel gemäß Anspruch 16, **dadurch gekennzeichnet, dass** ihr nutzbares Volumen 10 bis 40 ml einschließlich beträgt.

18. Verwendung des Konzentrats gemäß einem der Ansprüche 9 bis 15 oder einer Kapsel gemäß Anspruch 16 oder 17 zur Herstellung eines Kakaogetränks, das wenigstens 2% gelösten Kakao aufweist.

## Claims

1. A process for preparing a chocolate drink containing at least 2% of cocoa, with a coffee machine operating by percolation under pressure comprising the following stages:
(i) inserting, into a coffee machine operating by percolation under pressure of a dose of coffee, a capsule containing a concentrate of an instant chocolate drink comprising cocoa powder and a cocoa taste enhancer which is produced by a process of solid/liquid extraction from roasted cocoa beans, as raw material, this extraction step being followed by a filtration step with separation of solid and liquid phases, a concentration and a drying of the resulting concentrated syrup,
(ii) injecting water to solubilize the concentrate, and
(iii) recovering the chocolate drink.

2. Process according to claim 1, **characterized in that** the solid/liquid extraction comprises a step of wetting, and beans maceration in the presence of water, if appropriate precede by an alkalisation step.

3. Process according to claim 2, **characterized in that** in the event of an alkalisation step, the alkalisation is carried out directly on beans at the beginning of the extraction operation or after the filtration, on the extracted juice.

4. Process according to any one of claims 1 to 3, **characterized in that** said concentrate has a percentage of dry matter of 60 to 90%, inclusive, and 21 g of said concentrate are completely solubilized by the passage, at a temperature of 60 to 70°C and at a maximum pressure of 6.10⁵ Pa, of a maximum of 90g of water.

5. Process according to claims 1 to 4, **characterized in that** the concentrate has a density of 1.15 to 1.45 inclusive.

6. Process according to any one of claims 1 to 5, **characterized in that** the concentrate has a viscosity comprised between 1300 and 2900mPa/s.

7. Process according to any one of the preceding claims, **characterized in that** said concentrate is in liquid form.

8. Process according to any one of claims 1 to 7, **characterized in that** the taste enhancer is introduced at a concentration of 1 to 10%.

9. A concentrate of an instant chocolate drink, **characterized in that** it comprises in combination with a cocoa powder and a cocoa taste enhancer, said taste enhancer being produced by a solid/liquid extraction process from beans as raw material, knowing roasted cocoa beans, this step being followed by a filtration step with separation of solid and liquid phases, a concentration and a drying of the resulting concentrated syrup.

10. Concentrate according to claim 9, **characterized in that** said solid/liquid extraction comprises a step of wetting, and beans maceration in the presence of water, if appropriate precede by an alkalisation step.

11. Concentrate according to claim 10, **characterized in that** in the event of an alkalisation step, the alkalisation is carried out directly on beans at the beginning of the extraction operation or after the filtration, on the extracted juice.

12. Concentrate according to claims 9 to 11, **characterized in that** the taste enhancer is at a concentration of 1 to 10%.

13. Concentrate according to claims 9 to 12, **characterized in that** 21 g of said concentrate are entirely solubilized by the passage of a maximum of 90g of water, said water being at a temperature of 60 to 70°C and at a maximum pressure of 6.10⁵Pa, for a percentage of dry matter of 60 to 90%, inclusive.

14. Concentrate according to any one of claims 9 to 13, **characterized in that** it has a density of 1.15 to 1.45 inclusive.

15. Concentrate according to any one of claims 9 to 14, **characterized in that** it has a viscosity of 1300 to 2900 mPa/s, inclusive.

16. Capsule for a coffee machine operating by percolation under pressure, **characterized in that** it contains a concentrate according to any one of claims 9 to 15.

17. Capsule according to claim 16, **characterized in that** its useful volume is from 10 to 40 ml, inclusive.

18. Use of the concentrate according to any one of claims 9 to 15 or of a capsule according to claim 16 or 17 for the manufacture of a chocolate drink having at least 2% solubilized cocoa.
